# EUROPEAN PATENT SPECIFICATION

(11) **EP 3 163 664 B1**
(45) Date of publication and mention of the grant of the patent: **18.07.2018**
(21) Application number: 16196405.1
(22) Date of filing: 28.10.2016
(51) Int. Cl.: H01M 10/0525, H01M 10/0567, H01M 4/505, H01M 4/525

(54) **LITHIUM BATTERY**
LITHIUMBATTERIE
BATTERIE AU LITHIUM

(30) Priority: 30.10.2015 KR 20150152539
(43) Date of publication of application: 03.05.2017
(73) Proprietor: Samsung SDI Co., Ltd., Yongin-si, Gyeonggi-do (KR)
(72) Inventor: LEE, Seungtae, Gyeonggi-do, (KR); CHOI, Hyunbong, Gyeonggi-do, (KR); SON, Miyoung, Gyeonggi-do, (KR); KIM, Aeran, Gyeonggi-do, (KR); WOO, Myungheui, Gyeonggi-do, (KR); LEE, Harim, Gyeonggi-do, (KR); GOH, Aehui, Gyeonggi-do, (KR)
(74) Representative: Leanse, Thomas Gordon Hamilton

(56) References cited:
- US-A1- 2010 216 034
- US-A1- 2012 244 410

## Description

### FIELD OF THE INVENTION

The present invention relates to a lithium battery.

### BACKGROUND OF THE INVENTION

Lithium batteries may be used as power sources for portable electronic devices, such as video cameras, mobile phones, laptop computers, and the like. Rechargeable lithium secondary batteries may have an energy density per unit weight that is three or more times greater than that of general lead storage batteries, nickel-cadmium batteries, nickel-hydrogen batteries, nickel-zinc batteries, and the like, and may be rapidly charged.

US 2010/0216034 A1 and US 2012/0244410 A1 each disclose a lithium battery comprising an electrolyte with a lithium salt and a 1,2-ethanedisulfonic acid anhydride; and a positive electrode comprising a lithium-nickel based composite compound.

### SUMMARY OF THE INVENTION

The present invention provides a lithium battery comprising a positive electrode, the positive electrode comprising a lithium-nickel-based composite compound that contains about 50 mol% to about 100 mol% of nickel; a negative electrode; and an electrolyte, wherein the electrolyte comprises a lithium salt and a compound represented by the following Formula 1: 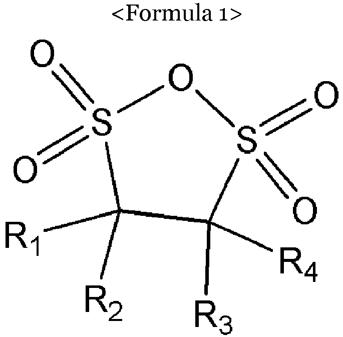 wherein, in Formula 1, R₁, R₂, R₃, and R₄ are each independently hydrogen, an unsubstituted C₁-C₁₀ alkyl group, a C₁-C₁₀ alkyl group substituted with one or more halogen atoms, an unsubstituted C₆-C₂₀ aryl group, a C₆-C₂₀ aryl group substituted with one or more halogen atoms, an unsubstituted C₃-C₂₀ heteroaryl group, or a C₃-C₂₀ heteroaryl group substituted with one or more halogen atoms.

In Formula 1, R₁ to R₄ may each independently be hydrogen, a methyl group, or a trifluoromethyl group.

The compound represented by Formula 1 may be one of the following Compounds 2 to 6:

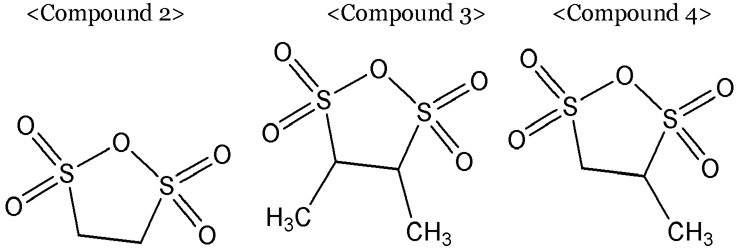

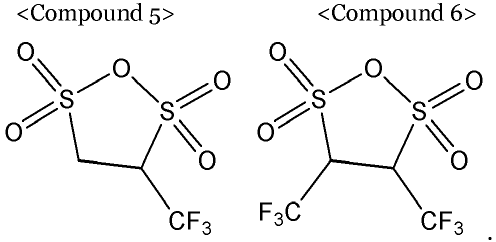

The lithium-nickel-based composite compound is represented by the following Formula 7:

<Formula 7> LiₓNi_{y}M_{1-y}O₂

wherein, in Formula 7, x is 0.9 to 1.2, y is 0.5 to 1.0, and M is cobalt (Co), aluminum (Al), or a combination thereof.

The compound represented by Formula 7 may be a compound represented by one of the following Formula 9:

<Formula 9> LiₓNi_{y}Co_{z}Al_{1-y-z}O₂

wherein, in Formula 9, y may be 0.5 to 1.0 and z may be 0 to 0.5.

The compound represented by Formula 7 may be LiNi_{0.88}Co_{0.1}Al_{0.02}O₂.

The compound represented by Formula 1 may be present in an amount of about 0.1 wt% to about 10 wt%, based on a total weight of the electrolyte.

The electrolyte may comprise an organic solvent, the organic solvent comprising dialkyl carbonate, cyclic carbonate, linear or cyclic ester, linear or cyclic amide, aliphatic nitrile, linear or cyclic ether, or derivatives thereof.

The electrolyte may comprise an organic solvent, the organic solvent comprising dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), butylene carbonate, ethyl propionate, ethyl butyrate, acetonitrile, succinonitrile (SN), dimethyl sulfoxide, dimethylformamide, dimethylacetamide, γ-valerolactone, γ-butyrolactone, or tetrahydrofuran.

The lithium salt may comprise LiPF₆, LiBF₄, LiSbF₆, LiAsF₆, LiClO₄, LiCF₃SO₃, Li(CF₃SO₂)₂N, LiC₄F₉SO₃, LiAlO₂, LiCl, LiI, LiAlCl₄, or LiN(CₓF₂ₓ₊₁SO₂)(C_{y}F_{2y+1}SO₂) in which x and y are each independently 1 to 20.

A concentration of the lithium salt in the electrolyte may be about 0.01 M to about 2.0 M.

### BRIEF DESCRIPTION OF THE DRAWINGS

Features will be apparent to those of skill in the art by describing in detail exemplary embodiments with reference to the attached drawings in which:
FIG. 1 illustrates a diagram of a lithium battery according to an exemplary embodiment;
FIG. 2 illustrates a differential capacity curve of lithium batteries manufactured according to Example 1 (not according to the invention; for reference only) and Comparative Example 1;
FIG. 3 illustrates a graph showing impedance characteristics of the lithium batteries of Example 1 (not according to the invention; for reference only) and Comparative Example 1;
FIG. 4 illustrates a graph showing impedance characteristics of lithium batteries manufactured according to Example 2 and Comparative Example 4;
FIG. 5 illustrates a graph showing impedance characteristics of lithium batteries manufactured according to Comparative Examples 2 and 5;
FIG. 6 illustrates a graph showing impedance characteristics of lithium batteries manufactured according to Comparative Examples 3 and 6;
FIG. 7 illustrates a graph showing charge and discharge characteristics at a high temperature (45 °C) of the lithium batteries of Example 1 (not according to the invention; for reference only) and Comparative Example 1;
FIG. 8 illustrates a graph showing charge and discharge characteristics at a high temperature (45 °C) of the lithium batteries of Example 2 and Comparative Example 4;
FIG. 9 illustrates a graph showing charge and discharge characteristics at a high temperature (45 °C) of the lithium batteries of Comparative Examples 2 and 5;
FIG. 10 illustrates a graph showing charge and discharge characteristics at a high temperature (45 °C) of the lithium batteries of Comparative Examples 3 and 6;
FIG. 11 illustrates a graph showing impedance characteristics of the lithium batteries of Example 1 (not according to the invention; for reference only) and Comparative Example 1 after storage at a high temperature (60 °C);
FIG. 12 illustrates a graph showing impedance characteristics of the lithium batteries of Example 2 and Comparative Example 4 after storage at a high temperature (60 °C);
FIG. 13 illustrates a graph showing impedance characteristics of the lithium batteries of Comparative Examples 2 and 5 after storage at a high temperature (60 °C); and
FIG. 14 illustrates a graph showing impedance characteristics of the lithium batteries of Comparative Examples 3 and 6 after storage at a high temperature (60 °C).

### DETAILED DESCRIPTION OF THE INVENTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or element, it can be directly on the other layer or element, or intervening elements may also be present. In addition, it will also be understood that when an element is referred to as being "between" two elements, it can be the only element between the two elements, or one or more intervening elements may also be present. Like reference numerals refer to like elements throughout.

Expressions such as "at least one of," when preceding a list of elements, modify the entire list of elements and do not modify the individual elements of the list.

Hereinafter, a lithium battery according to exemplary embodiments will be described in more detail.

A lithium battery according to an embodiment comprises a positive electrode, a negative electrode; and an electrolyte. The positive electrode comprises a lithium-nickel-based composite compound that comprises 50 mol% or more of nickel. "A lithium-nickel-based composite compound that comprises 50 mol% or more of nickel" refers to a lithium-nickel-based composite compound in which an amount of nickel in the lithium-nickel-based composite compound is in a range of about 50 mol% or more with respect to a total amount of a transition metal. For example, in LiₓNi_{y}M_{1-y}O₂, a total amount of transition metal denotes a total amount of Ni and M.

In another embodiment, not defining the invention, "a lithium-nickel-based composite compound that comprises 50 mol% or more of nickel" refers to a lithium-nickel-based composite compound in which the molar amount of nickel is 50% to 100% of the molar amount of lithium. The electrolyte comprises a lithium salt and a compound represented by Formula 1 below.

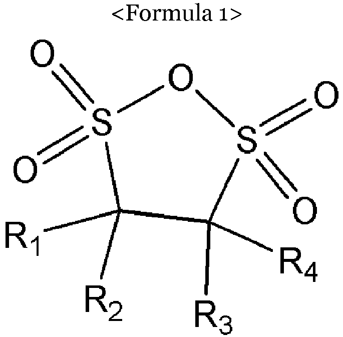

In Formula 1 R₁, R₂, R₃, and R₄ may each independently be, e.g., hydrogen, an unsubstituted C₁-C₁₀ alkyl group, a C₁-C₁₀ alkyl group substituted with one or more halogen atoms (e.g. 1 to 5 halogen atoms, typically 1 to 3 halogen atoms), an unsubstituted C₆-C₂₀ aryl group, a C₆-C₂₀ aryl group substituted with one or more halogen atoms (e.g. 1 to 5 halogen atoms, typically 1 to 3 halogen atoms), an unsubstituted C₃-C₂₀ heteroaryl group, or a C₃-C₂₀ heteroaryl group substituted with one or more halogen atoms (e.g. 1 to 5 halogen atoms, typically 1 to 3 halogen atoms).

The compound represented by Formula 1 and comprised in the electrolyte has a cyclic structure containing two sulfonyl groups. When such a compound is added to an electrolyte, the electrolyte may have a high-temperature stability due to the sulfonyl groups. The compound represented by Formula 1 may be reduced and decomposed before the electrolyte due to the cyclic structure, thereby forming a sulfonate(-SO₃-)-based polymer film. Such a polymer film may cover a larger area of an electrode and, moreover, such a sulfonate(-SO₃-)-based polymer film may have excellent high-temperature stability. Thus, strong effects of suppressing an increase in resistance at high temperatures may be obtained.

As described above, when the compound represented by Formula 1 is added to the electrolyte, a stable SEI layer may be more easily formed at the negative electrode and thus the lithium battery may have enhanced lifespan, e.g., high-temperature lifespan. When the lithium battery is stored at a high temperature, side reactions may be suppressed and thus a drop in voltage, e.g., an increase in internal resistance, may be suppressed, whereby high-temperature storage characteristics are enhanced. In an implementation, in Formula 1 above, each of R₁ to R₄ may independently be, e.g., hydrogen, a methyl group, or a trifluoromethyl group.

In an implementation, the compound represented by Formula 1 may be one of the following Compounds 2 to 6.

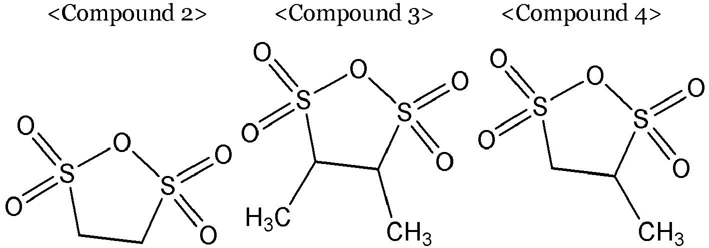

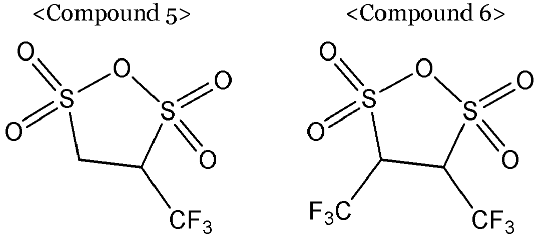

In an implementation, the compound represented by Formula 1 may be present in an amount of about 0.1 wt% to about 10 wt%, e.g., about 0.1 wt% to about 7 wt%, based on a total weight of the electrolyte. When the amount of the compound represented by Formula 1 in the electrolyte is within the ranges described above, a battery with enhanced lifespan characteristics may be obtained.

In the lithium battery, the positive electrode comprises a nickel-rich lithium-nickel-based composite oxide. The nickel-rich lithium-nickel-based composite oxide comprises nickel in an amount of 50 mol% to 100 mol%. When the content of nickel is within the range described above, a high-output and high-capacity lithium battery may be manufactured. However, when the content of nickel is as high as the range described above, deposition of transition metals of the nickel-rich lithium-nickel-based composite oxide could severely occur and high-temperature characteristics could deteriorate.

When the electrolyte comprises the compound represented by Formula 1, protective effects of the negative electrode may be enhanced and thus by-products may be generated to a lesser degree, which may help decrease the elution of transition metals of the positive electrode. In addition, the compound represented by Formula 1 may have polymer film effects at the positive electrode, and thus damage to the positive electrode due to by-products may be decreased. As such, by including the compound represented by Formula 1 in the electrolyte, the aforementioned problems, e.g., deterioration of high-temperature characteristics, may be reduced and/or prevented. Thus, a high-output and high-capacity lithium battery with, at a high temperature, long lifespan and strong effects of suppressing an increase in resistance may be manufactured. If a lithium-nickel-based composite oxide containing less than 50 mol% of nickel were to be used, less battery degradation could occur, as compared to a case in which the lithium-nickel-based composite oxide containing about 50 mol% to about 100 mol% of nickel were used. Thus, if the compound represented by Formula 1 were to be added to an electrolyte, and an electrode comprising a lithium-nickel-based composite oxide containing less than 50 mol% of nickel were used, long lifespan and strong effects of suppressing an increase in resistance, at a high temperature, may be insignificant.

When both the electrode comprising the nickel-rich lithium-nickel-based composite oxide and the electrolyte comprising the compound represented by Formula 1 are used, the lithium battery may have, at a high temperature, improved lifespan and good effects of suppressing an increase in resistance. The nickel-rich lithium-nickel-based composite oxide is a compound represented by the following Formula 7.

[Formula 7] LiₓNi_{y}M_{1-y}O₂

In Formula 7, x is 0.9 to 1.2, y is 0.5 to 1.0, and M is cobalt (Co), and/or aluminum (Al).

The compound represented by Formula 7 may be, e.g., a compound represented by Formula 9 below.

[Formula 9] LiₓNi_{y}Co_{z}Al_{1-y-z}O₂

In Formula 9, y may be 0.5 to 1.0 and z may be 0 to 0.5.

In an implementation, the compound represented by Formula 7 may be, e.g., LiNi_{0.88}Co_{0.1}Al_{0.02}O₂.

An organic solvent of the electrolyte may include a low boiling point solvent. The term "low boiling point solvent" as used herein may refer to a solvent having a boiling point of 200 °C or less at 25 °C (ambient temperature) and 1 atm.

For example, the organic solvent may comprise dialkyl carbonate, cyclic carbonate, linear or cyclic ester, linear or cyclic amide, aliphatic nitrile, linear or cyclic ether, or derivatives thereof.

In an implementation, the organic solvent may comprise, e.g., dimethyl carbonate (DMC), ethyl methyl carbonate (EMC), methyl propyl carbonate, ethyl propyl carbonate, diethyl carbonate (DEC), dipropyl carbonate, propylene carbonate (PC), ethylene carbonate (EC), butylene carbonate, ethyl propionate, ethyl butyrate, acetonitrile, succinonitrile (SN), dimethyl sulfoxide, dimethylformamide, dimethylacetamide, γ-valerolactone, γ-butyrolactone, or tetrahydrofuran. In an implementation, a suitable low boiling point solvent that may be used.

In an implementation, a concentration of the lithium salt in the electrolyte may be, e.g., about 0.01 M to about 2.0 M. In an implementation, a suitable concentration of the lithium salt may be used. Within the concentration range described above, enhanced battery characteristics may be achieved.

The lithium salt used in the electrolyte may comprise a suitable lithium salt. In an implementation, the lithium salt may comprise, e.g., LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (in which x and y are each independently 1 to 20), LiCl, LiI, a mixture thereof, or the like. In an implementation, the lithium salt of the electrolyte may be, e.g., LiPF₆.

The electrolyte may be in a liquid or gel state.

Types of the lithium battery may include lithium secondary batteries such as a lithium ion battery, a lithium ion polymer battery, a lithium sulfur battery, and the like, and lithium primary batteries.

In the lithium battery, graphite may be used as a negative active material. The lithium battery may have a high voltage of 4.5 V or more, e.g., 4.8 V or more.

A lithium battery according to an embodiment may be manufactured using the following method.

First, a positive electrode may be prepared.

For example, a positive active material composition, in which a positive active material, a conductive material, a binder, and a solvent are mixed, may be prepared. The positive active material composition may be directly coated on a metal current collector to manufacture a positive electrode plate. In another embodiment, the positive active material composition may be cast on a separate support and then a film separated from the support may be laminated on a metal current collector, thereby completing the manufacture of a positive electrode. In an implementation, the positive electrode may be manufactured using other methods.

As the positive active material, the nickel-rich lithium-nickel-based composite oxide described above may be used, e.g., in combination with a general lithium-containing metal oxide. The lithium-containing metal oxide may include composite oxides of lithium and a metal selected from cobalt, manganese, nickel, and combinations thereof. The lithium-containing metal oxide may be a compound represented by any one of the following Formulae: LiₐA_{1-b}B'_{b}D₂ where 0.90 ≤ a ≤ 1.8 and 0 ≤ b ≤ 0.5; LiₐE_{1-b}B'_{b}O_{2-c}D_{c} where 0.90 ≤ a ≤ 1.8, 0 ≤ b ≤ 0.5, and 0 ≤ c ≤ 0.05; LiE_{2-b}B'_{b}O_{4-c}D_{c} where 0 ≤ b ≤ 0.5 and 0 ≤ c ≤ 0.05; LiₐNi_{1-b-c}Co_{b}B'_{c}D_{α} where 0.90 ≤ a ≤ 1.8, 0 ≤ b ≤ 0.5, 0 ≤ c ≤ 0.05, and 0 < α ≤ 2; LiₐNi_{1-b-c}Co_{b}B'_{c}O_{2-α}F'_{α} where 0.90 ≤ a ≤ 1.8, 0 ≤ b ≤ 0.5, 0 ≤ c ≤ 0.05, and 0 < α < 2; LiₐN_{1-b-c}Co_{b}B'_{c}C_{2-α}F'₂ where 0.90 ≤ a ≤ 1.8, 0 ≤ b ≤ 0.5, 0 ≤ c ≤ 0.05, and 0 < α < 2; LiₐNi_{1-b-c}Mn_{b}B'_{c}D_{α} where 0.90 ≤ a ≤ 1.8, 0 ≤ b ≤ 0.5, 0 ≤ c ≤ 0.05, and 0 < α ≤ 2; LiₐNi_{1-b-c}Mn_{b}B'_{c}O_{2-α}F'_{α} where 0.90 ≤ a ≤ 1.8, 0 ≤ b ≤ 0.5, 0 ≤ c ≤ 0.05, and 0 < α < 2; LiₐNi_{1-b-c}Mn_{b}B'_{c}C_{2-α}F'₂ where 0.90 ≤ a ≤ 1.8, 0 ≤ b ≤ 0.5, 0 ≤ c ≤ 0.05, and 0 < α < 2; LiₐNi_{b}E_{c}G_{d}O₂ where 0.90 ≤ a ≤ 1.8, 0 ≤ b ≤ 0.9, 0 ≤ c ≤ 0.5, and 0.001 ≤ d ≤ 0.1; LiₐNi_{b}Co_{c}Mn_{d}GeO₂ where 0.90 ≤ a ≤ 1.8, 0 ≤ b ≤ 0.9, 0 ≤ c ≤ 0.5, 0 ≤ d ≤0.5, and 0.001 ≤ e ≤ 0.1; LiₐNiG_{b}O₂ where 0.90 ≤ a ≤ 1.8 and 0.001 ≤ b ≤ 0.1; LiₐCoG_{b}O₂ wherein 0.90 ≤ a ≤ 1.8 and 0.001 ≤ b ≤ 0.1; LiₐMnG_{b}O₂ where 0.90 ≤ a ≤ 1.8 and 0.001 ≤ b ≤ 0.1; LiₐMn₂G_{b}O₄ where 0.90 ≤ a ≤ 1.8 and 0.001 ≤ b ≤ 0.1; QO₂; QS2; LiQS2; V₂O₅; LiV₂O₅; LiI'O₂; LiNiVO₄; Li_{(3-f)}J₂(PO₄)₃ where 0 ≤ f ≤ 2; Li_{(3-f)}Fe₂(PO₄)₃ where 0 ≤ f ≤ 2; and LiFePO₄.

In the formulae above, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof.

For example, the positive active material may comprise LiCoO₂, LiMnₓO₂ₓ where x=1 or 2, LiNi₁₋ₓMnₓO₂ₓ where 0<x<1, LiNi_{1-x-y}CoₓMn_{y}O₂ where 0≤x≤0.5, 0≤y≤0.5, and 1-x-y>0.5, LiFePO₄, or the like.

In an implementation, the compounds described above may have a coating layer at their surfaces. In an implementation, the compounds may be used in combination with a compound having a coating layer. The coating layer may comprise a coating element compound, such as an oxide of a coating element, a hydroxide of a coating element, an oxyhydroxide of a coating element, an oxycarbonate of a coating element, or a hydroxycarbonate of a coating element. The coating element compounds may be amorphous or crystalline. The coating element comprised in the coating layer may include, e.g., Mg, Al, Co, K, Na, Ca, Si, Ti, V, Sn, Ge, Ga, B, As, Zr, or a mixture thereof. A coating layer may be formed by using the coating elements in the aforementioned compounds by using any one of various methods that do not adversely affect physical properties of the positive active material (e.g., spray coating, immersion, or the like).

The conductive material may comprise, e.g., carbon black, graphite particulates, or the like. In an implementation, the conductive material may be a suitable conductive material

Examples of the binder may include a vinylidene fluoride/hexafluoropropylene copolymer, polyvinylidene fluoride (PVDF), polyacrylonitrile, polymethyl methacrylate, polytetrafluoroethylene, a mixture of the aforementioned polymers, and a styrene butadiene rubber-based polymer. In an implementation, the binder may comprise a suitable binder.

The solvent may comprise, e.g., N-methylpyrrolidone, acetone, water, or the like. In an implementation, the solvent may comprise a suitable solvent.

The amounts of the positive active material, the conductive material, the binder, and the solvent may be the same level as those used in a suitable lithium battery. In an implementation, at least one of the conductive material, the binder, and the solvent may be omitted according to the use and constitution of desired lithium batteries.

Next, a negative electrode is prepared.

For example, a negative active material composition may be prepared by mixing a negative active material, a conductive material, a binder, and a solvent. The negative active material composition may be directly coated on a metal current collector and dried to obtain a negative electrode plate. In an implementation, the negative active material composition may be cast on a separate support and a film separated from the support may be laminated on a metal current collector to complete the fabrication of a negative electrode plate.

As the negative active material, a suitable negative active material of lithium batteries may be used. For example, the negative active material may comprise lithium metal, a metal alloyable with lithium, a transition metal oxide, a non-transition metal oxide, and/or a carbonaceous material.

For example, the metal alloyable with lithium may comprise silicon (Si), tin (Sn), aluminum (Al), germanium (Ge), lead (Pb), bismuth (Bi), antimony (Sb), a Si-yttrium (Y) alloy (Y is an alkali metal, an alkali earth metal, Group 13 to 16 elements, a transition metal, a rare earth element, or a combination thereof except for Si), a Sn-Y alloy (Y is an alkali metal, an alkali earth metal, Group 13 to 16 elements, a transition metal, a rare earth element, or a combination thereof except for Sn), or the like. Examples of Y may include magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), germanium (Ge), phosphorus (P), arsenic (As), antimony (Sb), bismuth (Bi), sulfur (S), selenium (Se), tellurium (Te), polonium (Po), and combinations thereof.

For example, the transition metal oxide may include lithium titanate oxide, vanadium oxide, lithium vanadium oxide, or the like.

For example, the non-transition metal oxide may include SnO₂, SiOₓ where 0<x<2, or the like.

The carbonaceous material may comprise, e.g., crystalline carbon, amorphous carbon, or a mixture thereof. Examples of the crystalline carbon may include natural graphite and artificial graphite, each of which has an irregular form or is in the form of a plate, a flake, a sphere, or a fiber. Examples of the amorphous carbon may include soft carbon (low-temperature calcined carbon), hard carbon, mesophase pitch carbonized product, and calcined coke.

In the negative active material composition, a conductive material and a binder that are the same as those used in the positive active material composition may be used.

The amounts of the negative active material, the conductive material, the binder, and the solvent may be the same level as those used in a suitable lithium battery. At least one of the conductive material, the binder, and the solvent may be omitted according to the use and constitution of desired lithium batteries.

Next, a separator to be interposed between the positive electrode and the negative electrode is prepared.

A suitable separator may be used. As the separator, a separator having low resistance to transfer of ions in an electrolyte and high electrolyte-retaining ability may be used. Examples of the separator may include glass fiber, polyester, Teflon, polyethylene, polypropylene, polytetrafluoroethylene (PTFE), or combinations thereof, each of which may be a non-woven fabric or a woven fabric. For example, a windable separator formed of polyethylene, polypropylene, or the like may be used in lithium ion batteries, and a separator having a high electrolyte-retaining ability may be used in lithium ion polymer batteries. For example, the separator may be manufactured according to the following method.

A separator composition may be prepared by mixing a polymer resin, a filler, and a solvent. The separator composition may be directly coated on an upper portion of an electrode and dried, thereby completing the manufacture of a separator. In an implementation, the separator composition may be cast on a support and dried and a separator film separated from the support may be laminated on an upper portion of an electrode, thereby completing the manufacture of a separator.

The polymer resin used in the manufacture of the separator may comprise suitable materials used in binders of electrode plates. For example, the polymer resin may comprise a vinylidene fluoride/hexafluoropropylene copolymer, PVDF, polyacrylonitrile, polymethyl methacrylate, a mixture thereof, or the like.

Next, the electrolyte described above is prepared.

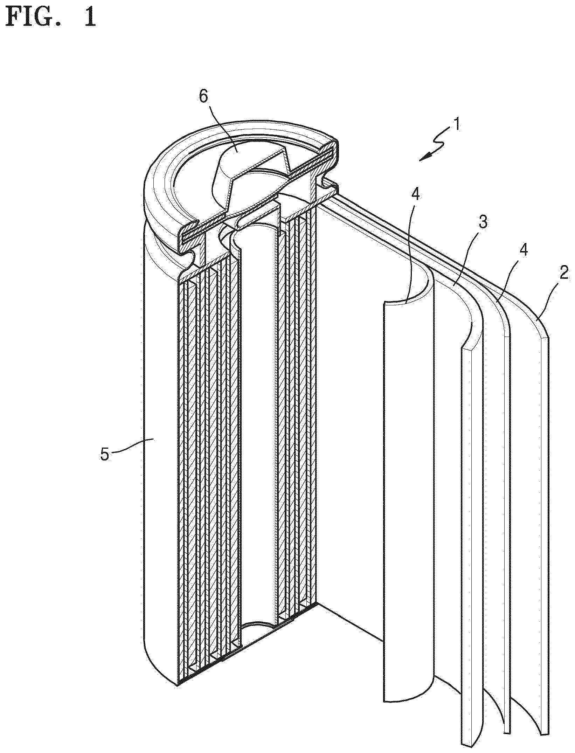

As illustrated in FIG. 1, a lithium battery 1 comprises a positive electrode 3, a negative electrode 2, and a separator 4. The positive electrode 3, the negative electrode 2, and the separator 4 may be wound, stacked, or folded and, thereafter, accommodated in a battery case 5. Subsequently, the electrolyte may be injected into the battery case 5 and the battery case 5 is sealed with a cap assembly 6, thereby completing the manufacture of the lithium battery 1. The battery case 5 may have a cylindrical, rectangular, pouch, or thin film shape. For example, the lithium battery may be a large-sized thin film-type battery. For example, the lithium battery may be a lithium ion battery.

The separator may be disposed between the positive electrode and the negative electrode to form a battery assembly. A plurality of battery assemblies may be stacked in a bi-cell structure and impregnated into an electrolyte, the resultant is put into a pouch and hermetically sealed, thereby completing the manufacture of a lithium ion polymer battery.

In an implementation, the battery assemblies may be stacked to form a battery pack, and such a battery pack may be used in any devices requiring high capacity and high-power output. For example, the battery pack may be used in notebook computers, smart phones, electric vehicles, and the like.

In addition, the lithium battery may have excellent lifespan characteristics and high rate characteristics and thus may be used in electric vehicles (EVs). For example, the lithium battery may be used in hybrid vehicles such as a plug-in hybrid electric vehicle (PHEV) or the like. The lithium battery may also be used in fields requiring the storage of a large amount of power. For example, the lithium battery may be used in electric bikes, motor-driven tools, and the like.

The term "alkyl" used herein refers to a fully saturated branched or non-branched (straight chain or linear) hydrocarbon.

Non-limiting examples of "alkyl" include methyl, ethyl, n-propyl, isopropyl, n-butyl, isobutyl, sec-butyl, n-pentyl, isopentyl, neopentyl, iso-amyl, n-hexyl, 3-methylhexyl, 2,2-dimethylpentyl, 2,3-dimethylpentyl, and n-heptyl.

Unless otherwise specified, at least one hydrogen atom of "alkyl" may be substituted with a halogen atom, a C₁-C₂₀ alkyl group substituted with a halogen atom (e.g., CCF₃, CHCF₂, CH₂F, CCl₃, or the like), a C₁-C₂₀ alkoxy group, a C₁-C₂₀ alkoxy alkyl group, a hydroxyl group, a nitro group, a cyano group, an amino group, an amidino group, hydrazine, hydrazone, a carboxyl group or a salt thereof, a sulfonyl group, a sulfamoyl group, a sulfonic acid group or a salt thereof, a phosphoric acid or a salt thereof, a C₁-C₂₀ alkyl group, a C₂-C₂₀ alkenyl group, a C₂-C₂₀ alkynyl group, a C₁-C₂₀ heteroalkyl group, a C₆-C₂₀ aryl group, a C₆-C₂₀ arylalkyl group, a C₆-C₂₀ heteroaryl group, a C₇-C₂₀ heteroarylalkyl group, a C₆-C₂₀ heteroaryloxy group, a C₆-C₂₀ heteroaryloxyalkyl group, or a C₆-C₂₀ heteroarylalkyl group.

The term "halogen" refers to fluorine, bromine, chlorine, iodine, and the like.

The term "aryl" used herein also refers to a group in which an aromatic ring is fused to at least one carbon ring. Non-limiting examples of "aryl" include phenyl, naphthyl, and tetrahydronaphthyl.

In addition, unless otherwise specified, at least one hydrogen atom of the aryl group may be substituted with the same substituent as in the alkyl group described above.

The term "heteroaryl" refers to a monocyclic or bicyclic organic compound which contains at least one heteroatom selected from N, O, P, and S and has carbon atoms as the remaining ring atoms. The heteroaryl group may contain, for example, 1 to 5 heteroatoms and 5 to 10 ring members. The S or N group may have various oxidation states through oxidation.

Examples of the heteroaryl group include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazine-2-yl, pyrazine-5-yl, 2-pyrimidine-2-yl, 4-pyrimidine-2-yl, and 5-pyrimidine-2-yl.

The term "heteroaryl" includes a case in which a hetero aromatic ring is fused to at least one of aryl, cycloaliphatic and heterocyclic groups.

The electrolyte and lithium battery will now be described in further detail with reference to the following examples and comparative examples. These examples are for illustrative purposes only and are not intended to limit the scope of the examples.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

### Example 1 (not according to the invention, for reference only): Manufacture of lithium battery

First, an electrolyte was prepared by mixing 1 wt% (with respect to a total weight of the electrolyte) of a compound represented by Formula 2 below (e.g., Compound 2) and LiPF₆ (to form a final 1.15 M LiPF₆ solution) in a mixed solvent of EC and DMC (volume ratio of 3:7).

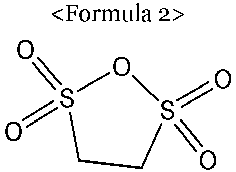

A negative electrode was manufactured using the following processes.

97 wt% of graphite particles (MC20 manufactured by Mitsubishi Chemical), 1.5 wt% of BM408 (manufactured by Daicel) as a conductive material, and 1.5 wt% of BM400-B (manufactured by Zeon) as a binder were mixed, the mixture was added to distilled water, and the resulting solution was stirred using a mechanical stirrer for 60 minutes to prepare a negative active material slurry. The negative active material slurry was coated, using a doctor blade, on a copper (Cu) current collector having a thickness of 10 µm to a thickness of about 60 µm, and the coated current collector was dried in a hot-air dryer at 100 °C for 0.5 hours, followed by further drying under conditions: in vacuum at 120 °C for 4 hours, and roll-pressed, thereby completing the fabrication of a negative electrode. The negative electrode had a mixed density of 1.55 g/cc and a loading level (L/L) of 14.36 mg/cm².

Separately, a positive electrode was manufactured according to the following processes.

94 wt% of LiNi_{0.6}Co_{0.2}Mn_{0.2}O₂ (NCM 622 manufactured by Samsung SDI), 3.0 wt% of Denka black as a conductive material, and 3.0 wt% of PVDF as a binder (Solef6020 manufactured by Solvay) were mixed. The mixture was added to N-methyl-2-pyrrolidone as a solvent, and the resultant mixture was stirred using a mechanical stirrer for 30 minutes to prepare a positive active material slurry. The positive active material slurry was coated, using a doctor blade, on an aluminum (Al) current collector having a thickness of 20 µm to a thickness of about 60 µm. The coated current collector was dried in a hot-air dryer at 100 °C for 0.5 hours, followed by further drying under conditions: in vacuum at 120 °C for 4 hours, and roll-pressed, thereby completing the fabrication of a positive electrode. The positive electrode had a mixed density of 3.15 g/cc and a loading level (L/L) of 27.05 mg/cm².

A lithium battery (about 40 mAh pouch cell) was manufactured using a polyethylene separator having a thickness of 16 µm (manufactured by SK Innovation) and the electrolyte prepared according to the processes described above.

### Example 2: Manufacture of lithium battery

A lithium battery was manufactured in the same manner as in Example 1, except that LiNi_{0.88}Co_{0.1}Al_{0.02}O₂ was used instead of LiNi_{0.6}Co_{0.2}Mn_{0.2}O₂ in the fabrication of the positive electrode.

### Examples 3 and 4 (not according to the invention - for reference only): Manufacture of lithium batteries

Lithium batteries were manufactured in the same manner as in Example 1, except that, in the preparation of the electrolyte, the amounts of the compound of Formula 2 were 0.1 wt% and 10 wt%, respectively.

### Comparative Example 1: Manufacture of lithium battery

A lithium battery was manufactured in the same manner as in Example 1, except that, in the preparation of the electrolyte, the compound of Formula 2 was not added.

### Comparative Example 2: Manufacture of lithium battery

A lithium battery was manufactured in the same manner as in Comparative Example 1, except that, in the fabrication of the positive electrode, LiCoO₂ was used instead of LiNi_{0.6}Co_{0.2}Mn_{0.2}O₂.

### Comparative Example 3: Manufacture of lithium battery

A lithium battery was manufactured in the same manner as in Comparative Example 1, except that, in the fabrication of the positive electrode, LiNi_{0.33}Co_{0.33}Mn_{0.33}O₂ was used instead of LiNi_{0.6}Co_{0.2}Mn_{0.2}O₂.

### Comparative Example 4: Manufacture of lithium battery

A lithium battery was manufactured in the same manner as in Example 2, except that, in the preparation of the electrolyte, the compound of Formula 2 was not added.

### Comparative Example 5: Manufacture of lithium battery

A lithium battery was manufactured in the same manner as in Example 1, except that, in the manufacture of the positive electrode, LiCoO₂ was used instead of LiNi_{0.6}Co_{0.2}Mn_{0.2}O₂.

### Comparative Example 6: Manufacture of lithium battery

A lithium battery was manufactured in the same manner as in Example 1, except that, in the manufacture of the positive electrode, LiNi_{0.33}Co_{0.33}Mn_{0.33}O₂ was used instead of LiNi_{0.6}Co_{0.2}Mn_{0.2}O₂.

### Evaluation Example 1 (not according to the invention - for reference only): Differential capacity curve (dQ/dV)

The lithium batteries of Example 1 and Comparative Example 1 were each charged with a constant current of 0.5 C rate at ambient temperature (25 °C) until the voltage reached 4.20 V (vs. Li) and then, while maintaining a constant voltage of 4.20 V, the charging process was cut off at a current of 0.05 C rate. Subsequently, each lithium battery was discharged with a constant current of 0.5 C rate until the voltage reached 2.80 V (vs. Li) (formation operation, 1^{st} cycle).

Each lithium battery having gone through the formation operation was charged with a constant current of 0.5 C rate at 25 °C until the voltage reached 4.20 V (vs. Li) and then, while maintaining a constant voltage of 4.20 V, the charging process was cut off at a current of 0.05 C rate. Subsequently, each lithium battery was discharged with a constant current of 1.5 C rate until the voltage reached 2.80 V (vs. Li), and this cycle of charging and discharging was repeated 300 times.

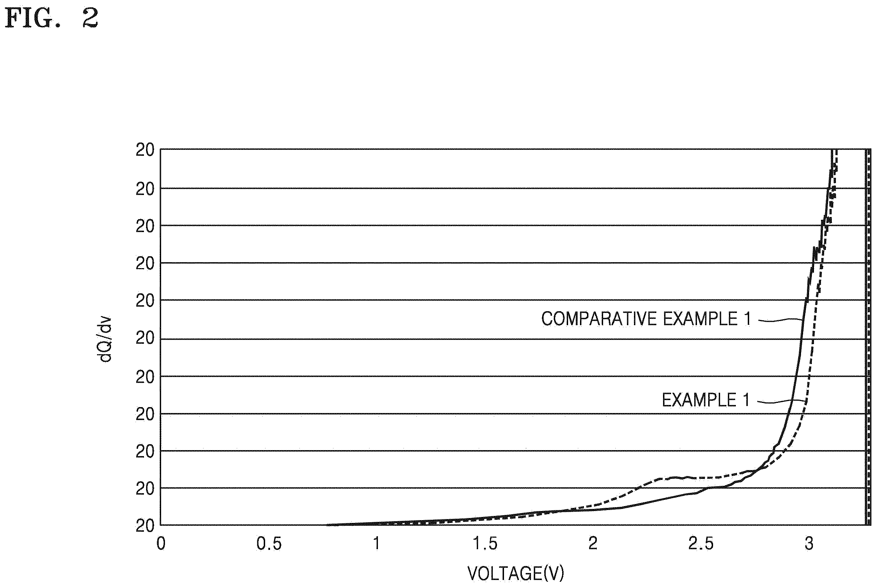

Differential capacity characteristics of the resultant lithium batteries were evaluated and the evaluation results are shown in FIG. 2.

Referring to FIG. 2, it may be that the lithium battery of Example 1 underwent a decomposition reaction at about 2 V before the lithium battery of Comparative Example 1. From the results, it may be seen that, when the compound of Formula 1 was added to an electrolyte, the compound of Formula 1 decomposed before other components of the electrolyte, thereby forming an SEI film as a protective film at a surface of a negative electrode.

### Evaluation Example 2: Impedance characteristics

### 1) Example 1 (not according to the invention) and Comparative Example 1

The lithium batteries of Example 1 and Comparative Example 1 were each charged with a constant current of 0.5 C rate at ambient temperature (25 °C) until the voltage reached 4.20 V (vs. Li) and then, while maintaining a constant voltage of 4.20 V, the charging process was cut off at a current of 0.05 C rate. Subsequently, each lithium battery was discharged with a constant current of 0.5 C rate until the voltage reached 2.80 V (vs. Li) (formation operation, 1^{st} cycle).

Resistances of the lithium batteries through the formation operation were measured using a 1260A impedance/gain-phase analyzer (Solartron) at 25 °C according to a 2-probe method. In this regard, the amplitude was ±10mV and a frequency range was 0.1 Hz to 1 MHz.

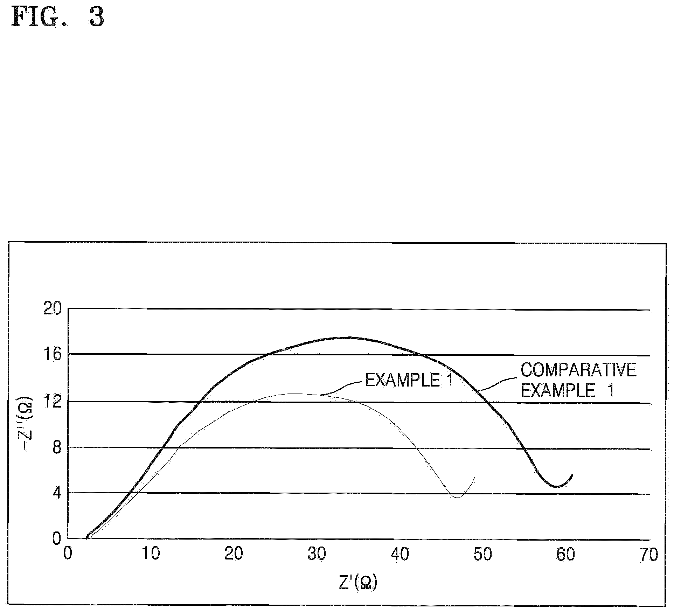

Impedances of the lithium batteries of Example 1 and Comparative Example 1 were measured 24 hours after the manufacture thereof and Nyquist plots for the impedance measurement results are shown in FIG. 3. In FIG. 3, an electrode interface resistance is determined by the position and size of a semicircle. In this regard, a difference between x-intercepts on left and right sides of the semicircle denotes the electrode interface resistance.

### 2) Example 2 and Comparative Example 4

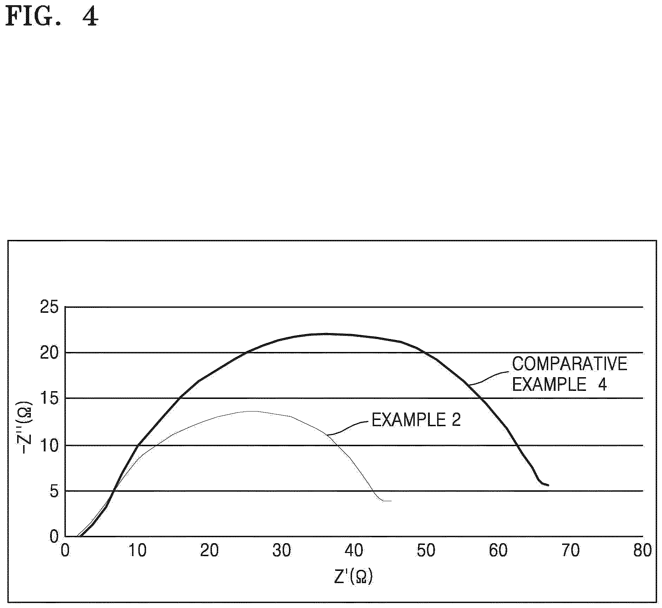

Resistances of the lithium batteries of Example 2 and Comparative Example 4 were measured using the same evaluation method as that used in the resistance measurement of the lithium batteries of Example 1 and Comparative Example 1, and the measurement results are shown in FIG. 4.

### 3) Comparative Examples 2 and 5

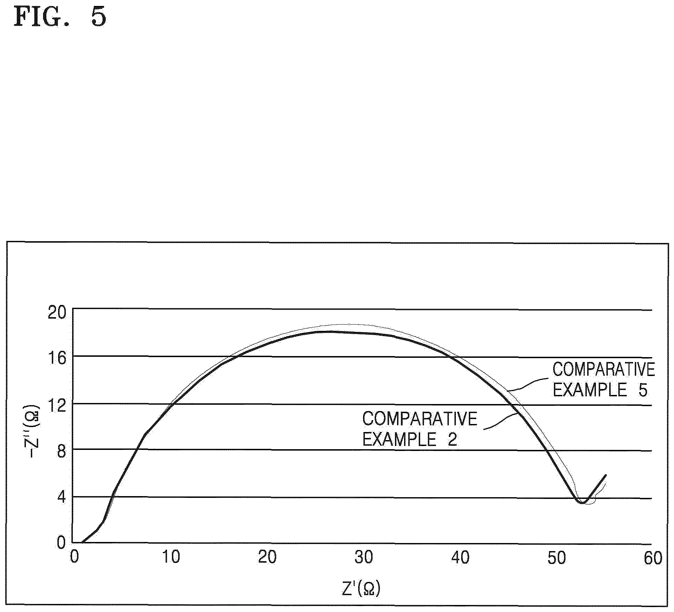

Resistances of the lithium batteries of Comparative Example 2 and Comparative Example 5 were measured using the same evaluation method as that used in the resistance measurement of the lithium batteries of Example 1 and Comparative Example 1, and the measurement results are shown in FIG. 5.

### 4) Comparative Examples 3 and 6

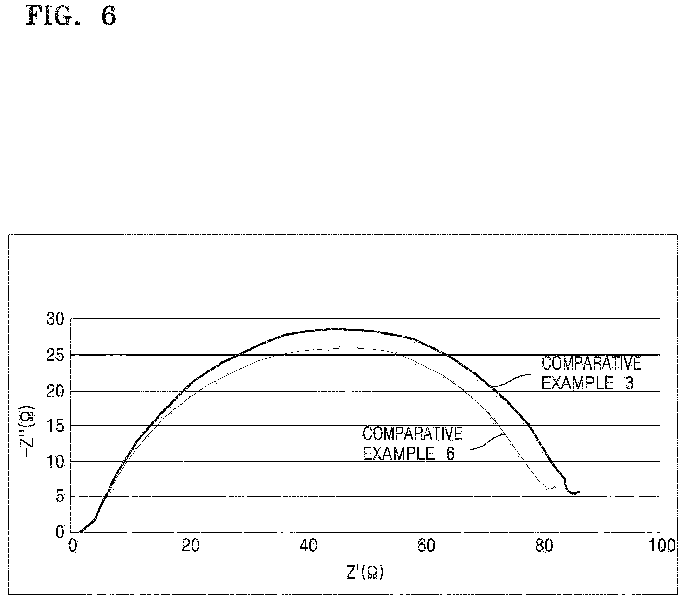

Resistances of the lithium batteries of Comparative Example 3 and Comparative Example 6 were measured using the same evaluation method as that used in the resistance measurement of the lithium batteries of Example 1 and Comparative Example 1, and the measurement results are shown in FIG. 6.

Referring to FIGS. 3 to 6, it may be seen that the lithium batteries of Examples 1 and 2 exhibited decreased interface resistance, as compared to the lithium batteries of Comparative Examples 1 to 6. The lithium batteries of Comparative Examples 3 and 6 used a lithium-nickel-based composite oxide having small nickel content and, as a result, exhibited increased interface resistance as compared to the lithium battery of Example 1. From the results, it may be seen that a nickel-rich positive active material containing 50 mol% or more of nickel had significant resistance decrease effects. These results are attributed to that, when an electrolyte comprising the compound of Formula 1 is used together with a positive electrode comprising a nickel-rich positive active material, the compound of Formula 1 forms an SEI layer more at a Li negative electrode than the positive electrode and the SEI layer acts as an effective protective film, which suppresses reduction decomposition of an organic solvent of the electrolyte.

### Evaluation Example 3: High-temperature (45 °C) charge and discharge characteristics

### 1) Example 1 (not according to the invention) and Comparative Example 1

The lithium batteries of Example 1 and Comparative Example 1 were each charged with a constant current of 0.1 C rate at 25 °C until the voltage reached 4.30 V (vs. Li) and then, while maintaining a constant voltage of 4.30 V, the charging process was cut off at a current of 0.05 C rate. Subsequently, each lithium battery was discharged with a constant current of 0.1 C rate until the voltage reached 2.8 V (vs. Li) (formation operation, 1^{st} cycle).

Each lithium battery having gone through the formation operation (1^{st} cycle) was charged with a constant current of 1.0 C rate at 25 °C until the voltage reached 4.20 V (vs. Li) and then, while maintaining a constant voltage of 4.20 V, the charging process was cut off at a current of 0.05 C. Subsequently, each lithium battery was discharged with a constant current of 0.2 C rate until the voltage reached 3.0 V (vs. Li) (formation operation, 2^{nd} cycle). Each resultant lithium battery was charged with a constant current of 1.0 C rate at 45 °C until the voltage reached 4.20 V (vs. Li) and then, while maintaining a constant voltage of 4.20 V, the charging process was cut off at a current of 0.05 C rate. Subsequently, each lithium battery was discharged with a constant current of 1.0 C rate until the voltage reached 3.0 V (vs. Li) and this cycle of charging and discharging was repeated 200 times.

In all the cycles of charging and discharging, there was a rest period of 20 minutes at the end of each cycle.

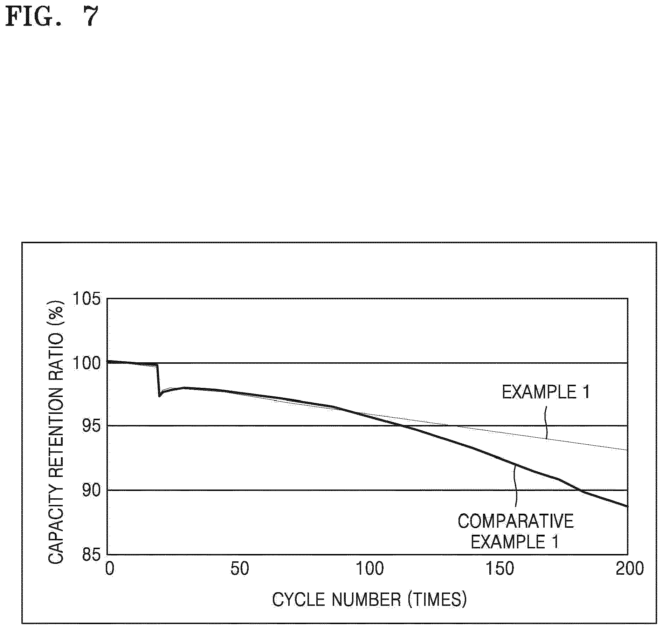

A part of charging and discharging experiment results is shown in FIG. 7.

### 2) Example 2 and Comparative Example 4

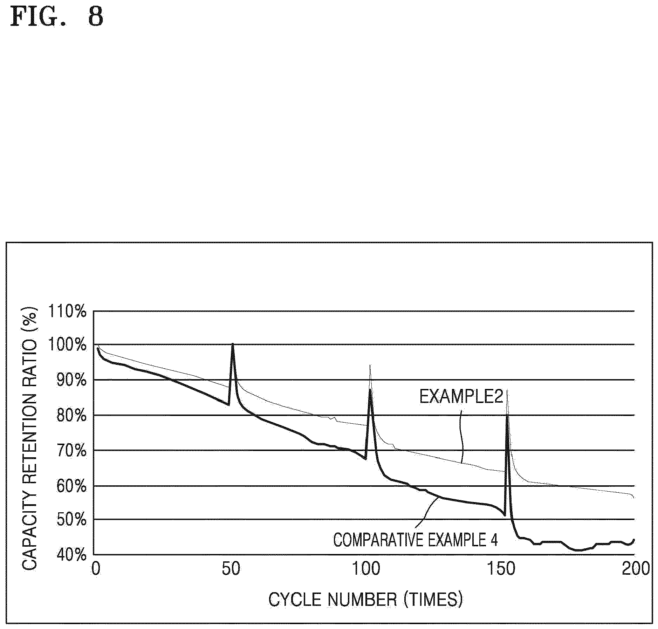

Resistances of the lithium batteries of Example 2 and Comparative Example 4 were measured using the same evaluation method as that used in the resistance measurement of the lithium batteries of Example 1 and Comparative Example 1, and the measurement results are shown in FIG. 8.

### 3) Comparative Examples 2 and 5

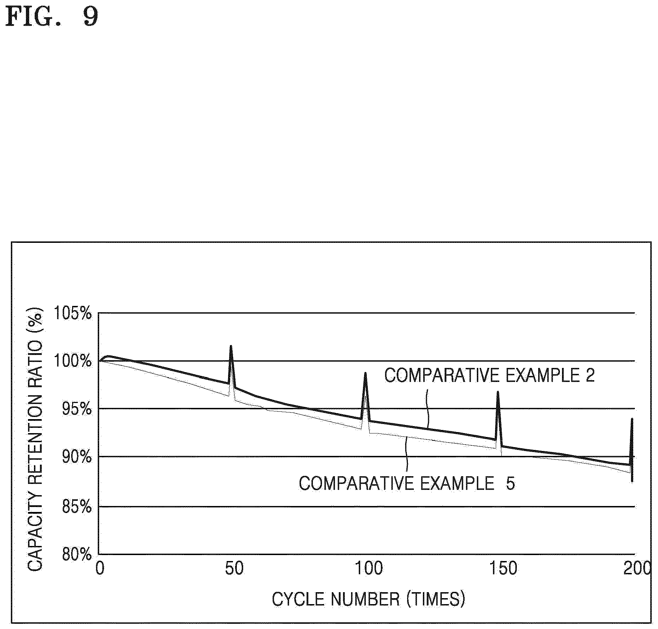

Resistances of the lithium batteries of Comparative Examples 2 and 5 were measured using the same evaluation method as that used in the resistance measurement of the lithium batteries of Example 1 and Comparative Example 1, and the measurement results are shown in FIG. 9.

### 4) Comparative Examples 3 and 6

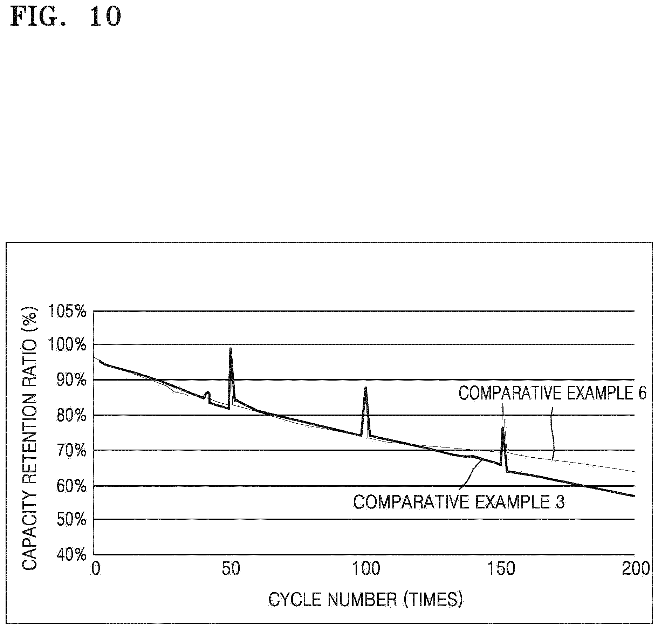

Resistances of the lithium batteries of Comparative Examples 3 and 6 were measured using the same evaluation method as that used in the resistance measurement of the lithium batteries of Example 1 and Comparative Example 1, and the measurement results are shown in FIG. 10.

Referring to FIGS. 6 to 10, it may be seen that the lithium batteries of Examples 1 and 2 exhibited significantly enhanced discharge capacity and lifespan characteristics, as compared to the lithium batteries of Comparative Examples 1 to 6.

In addition, charging and discharging experiment results of the lithium batteries of Examples 3 and 4 (both not according to the invention) were evaluated using the same method as that used for the lithium batteries of Examples 1 and 2.

As a result of evaluation, the lithium batteries of Examples 3 and 4 exhibited discharge capacity and lifespan characteristics that were almost similar to those of the lithium battery of Example 1.

### Evaluation Example 4: Impedance characteristics after storage at high temperature (60 °C)

### 1) Example 1 (not according to the invention) and Comparative Example 2

The lithium batteries of Example 1 and Comparative Example 2 were each charged with a constant current of 0.1 C rate at 25 °C until the voltage reached 4.30 V (vs. Li) and then, while maintaining a constant voltage of 4.30 V, the charging process was cut off at a current of 0.05 C rate. Subsequently, each lithium battery was discharged with a constant current of 0.1 C rate until the voltage reached 2.8 V (vs. Li) (formation operation, 1^{st} cycle).

Each lithium battery having gone through the formation operation (1^{st} cycle) was charged with a constant current of 1.0 C rate at 25 °C until the voltage reached 4.20 V (vs. Li) and then, while maintaining a constant voltage of 4.20 V, the charging process was cut off at a current of 0.05 C. Subsequently, each lithium battery was discharged with a constant current of 0.2 C rate until the voltage reached 3.0 V (vs. Li) (formation operation, 2^{nd} cycle).

Each lithium battery was charged with a constant current of 1.0 C rate at 25 °C until the voltage reached 4.30 V (vs. Li) and then, while maintaining a constant voltage of 4.30 V, the charging process was cut off at a current of 0.05 C rate to form a full charge state of 4.3 V (SOC=100%).

Each resultant lithium battery was stored in an oven at a high temperature of 60 °C for 20 days and resistance thereof was measured using a 1260A impedance/gain-phase analyzer (Solartron) at 25 °C according to a 2-probe method. In this regard, the amplitude was ±10mV, and a frequency range was 0.1 Hz to 1 MHz.

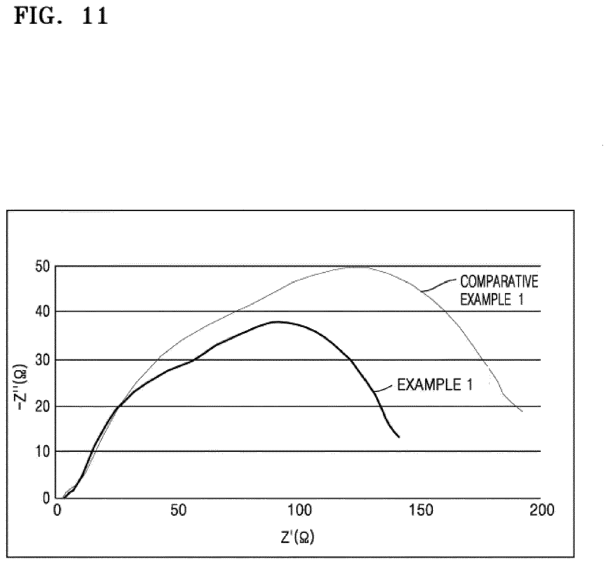

Impedances of the lithium batteries of Example 1 and Comparative Example 2 were measured 24 hours after the manufacture thereof and Nyquist plots for the impedance measurement results are shown in FIG. 11.

### 2) Example 2 and Comparative Example 4

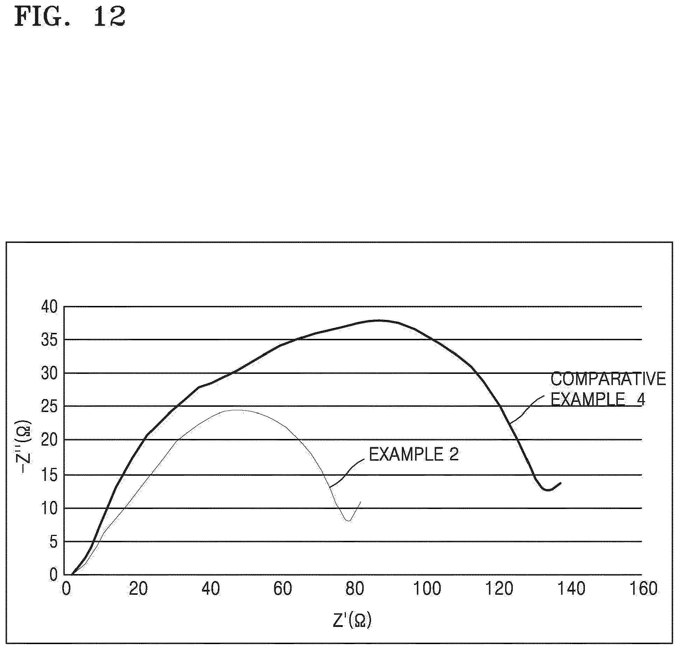

Resistances of the lithium batteries of Example 2 and Comparative Example 4 were measured using the same evaluation method as that used in the resistance measurement of the lithium batteries of Example 1 and Comparative Example 1, and the measurement results are shown in FIG. 12.

### 3) Comparative Examples 2 and 5

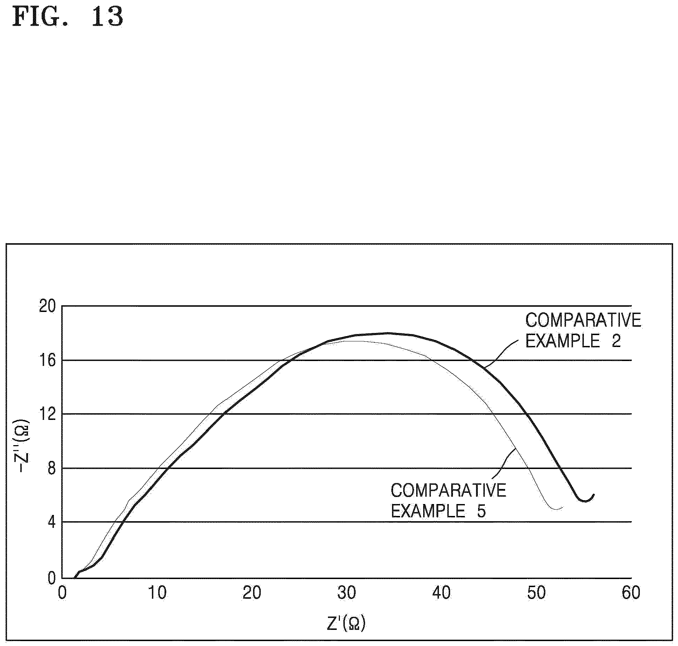

Resistances of the lithium batteries of Comparative Examples 2 and 5 were measured using the same evaluation method as that used in the resistance measurement of the lithium batteries of Example 1 and Comparative Example 1, and the measurement results are shown in FIG. 13.

### 4) Comparative Examples 3 and 6

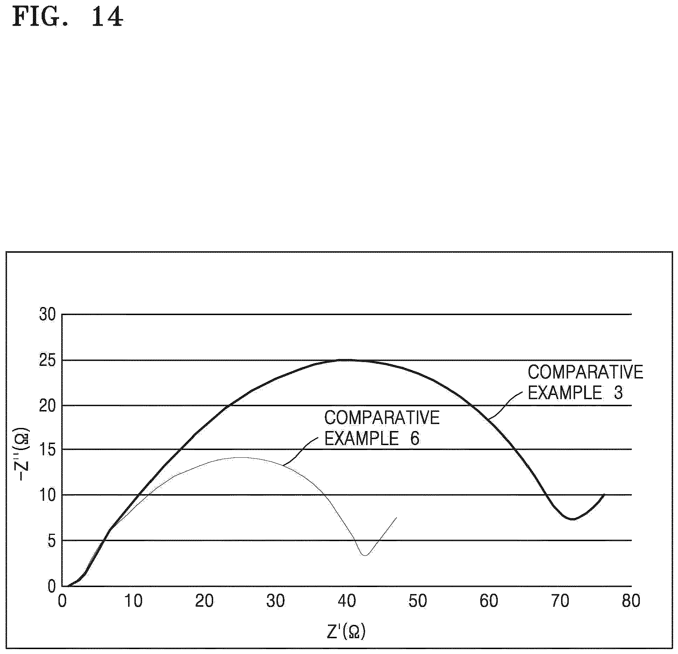

Resistances of the lithium batteries of Comparative Examples 3 and 6 were measured using the same evaluation method as that used in the resistance measurement of the lithium batteries of Example 1 and Comparative Example 1, and the measurement results are shown in FIG. 14.

Referring to FIGS. 11 to 14, it may be seen that the lithium batteries of Examples 1 and 2 exhibited a smaller increase in resistance after high-temperature (60 °C) storage than that of the lithium batteries of Comparative Examples 2 and 3.

By way of summation and review, lithium batteries may operate at high operating voltages, and thus, an aqueous electrolytic solution that is highly reactive with lithium may not be used. For example, an organic electrolyte may be used in lithium batteries. An organic electrolyte may be prepared by dissolving a lithium salt in an organic solvent. For example, the organic solvent may be an organic solvent that is stable at high voltages and may have a high ionic conductivity, a high dielectric constant, and a low viscosity.

LiPF₆ may be used as the lithium salt. However, LiPF₆ may react with an organic solvent of an electrolyte and thus may accelerate depletion of the organic solvent and generation a large amount of gases. In addition, when a carbonate-based polar non-aqueous solvent is used as an organic solvent, an irreversible reaction, where excess charges are used by a side reaction between a negative electrode/a positive electrode and an electrolyte during initial charging, may proceed. As a result of the irreversible reaction, a passivation layer, such as a solid electrolyte interface (SEI) layer, may be formed on the surface of a negative electrode. The SEI layer may prevent decomposition of the electrolyte during charging and discharging and acts as an ion tunnel. As the SEI layer has a higher stability and lower resistance, a lithium battery may have a longer lifespan.

To stabilize the SEI layer, various kinds of additives may be used. Some SEI layers formed using some additives may easily degrade at high temperatures. For example, the SEI layer may have a decreased stability at high temperatures. The embodiments may provide an electrolyte that helps suppress a side reaction of LiPF₆ and helps form an SEI layer having an enhanced high-temperature stability.

As is apparent from the foregoing description, a lithium battery according to an embodiment exhibits enhanced high-temperature lifespan characteristics and a suppressed increase in resistance.

## Claims

1. A lithium battery, comprising:
a positive electrode, the positive electrode comprising a lithium-nickel-based composite compound that contains 50 mol% to 100 mol% of nickel with respect to the total amount of transition metal in the composite compound;
a negative electrode; and
an electrolyte,
wherein the electrolyte comprises a lithium salt and a compound represented by the following Formula 1: 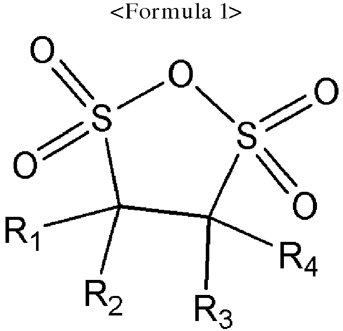
wherein, in Formula 1, R₁, R₂, R₃, and R₄ are each independently hydrogen, an unsubstituted C₁-C₁₀ alkyl group, a C₁-C₁₀ alkyl group substituted with one or more halogen atoms, an unsubstituted C₆-C₂₀ aryl group, a C₆-C₂₀ aryl group substituted with one or more halogen atoms, an unsubstituted C₃-C₂₀ heteroaryl group, or a C₃-C₂₀ heteroaryl group substituted with one or more halogen atoms;
and wherein the lithium-nickel-based composite compound is represented by the following Formula 7:
<Formula 7> LiₓNi_{y}M_{1-y}O₂
wherein, in Formula 7,
x is 0.9 to 1.2,
y is 0.5 to 1.0, and
M is cobalt, Co; aluminium, Al; or a combination thereof.

2. The lithium battery as claimed in claim 1, wherein, in Formula 1, R₁ to R₄ are each independently hydrogen, a methyl group, or a trifluoromethyl group.

3. The lithium battery as claimed in claim 1, wherein the compound represented by Formula 1 is one of the following Compounds 2 to 6:

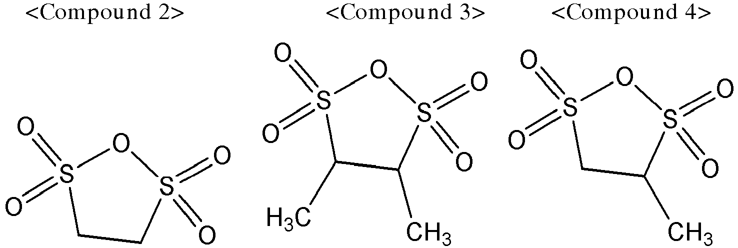

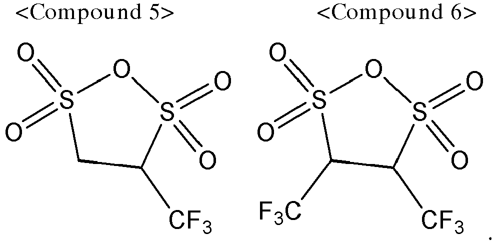

4. The lithium battery as claimed in claim 1, wherein the compound represented by Formula 7 is a compound represented by Formula 9:
<Formula 9> LiₓNi_{y}Co_{z}Al_{1-y-z}O₂
wherein, in Formula 9, y is 0.5 to 1.0 and z is 0 to 0.5.

5. The lithium battery as claimed in claim 4, wherein the compound represented by Formula 7 is LiNi_{0.88}Co_{0.1}Al_{0.02}O₂.

6. The lithium battery as claimed in claim 1, wherein the compound represented by Formula 1 is present in an amount of 0.1 wt% to 10 wt%, based on a total weight of the electrolyte.

7. The lithium battery as claimed in claim 1, wherein the electrolyte further comprises an organic solvent, the organic solvent comprising dialkyl carbonate, cyclic carbonate, linear or cyclic ester, linear or cyclic amide, aliphatic nitrile, linear or cyclic ether, or derivatives thereof.

8. The lithium battery as claimed in claim 1, wherein the electrolyte further comprises an organic solvent, the organic solvent comprising dimethyl carbonate DMC, ethyl methyl carbonate EMC, methyl propyl carbonate, ethyl propyl carbonate, diethyl carbonate DEC, dipropyl carbonate, propylene carbonate PC, ethylene carbonate EC, butylene carbonate, ethyl propionate, ethyl butyrate, acetonitrile, succinonitrile SN, dimethyl sulfoxide, dimethylformamide, dimethylacetamide, γ-valerolactone, γ-butyrolactone, or tetrahydrofuran.

9. The lithium battery as claimed in claim 1, wherein the lithium salt comprises LiPF₆, LiBF₄, LiSbF₆, LiAsF₆, LiClO₄, LiCF₃SO₃, Li(CF₃SO₂)₂N, LiC₄F₉SO₃, LiAlO₂, LiCl, LiI, LiAlCl₄, or LiN(CₓF₂ₓ₊₁SO₂)(C_{y}F_{2y+1}SO₂) in which x and y are each independently 1 to 20, or a mixture thereof.

10. The lithium battery as claimed in claim 1, wherein a concentration of the lithium salt in the electrolyte is 0.01 M to 2.0 M.

## Patentansprüche

1. Lithiumbatterie, umfassend:
eine positive Elektrode, wobei die positive Elektrode eine Mischverbindung auf Lithium-Nickel-Basis umfasst, die 50 Mol-% bis 100 Mol-% Nickel in Bezug auf die Gesamtmenge an Übergangsmetall in der Mischverbindung enthält;
eine negative Elektrode; und
einen Elektrolyten,
wobei der Elektrolyt ein Lithiumsalz und eine Verbindung, dargestellt durch die folgende Formel 1, umfasst: 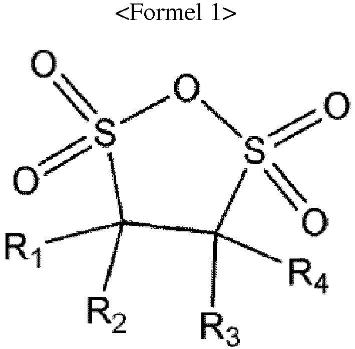
wobei, in Formel 1, R₁, R₂, R₃ und R₄ jeweils unabhängig voneinander ein Wasserstoffatom, ein unsubstituierter C₁-C₁₀-Alkylrest, ein mit einem oder mehreren Halogenatomen substituierter C₁-C₁₀-Alkylrest, ein unsubstituierter C₆-C₂₀-Arylrest, ein mit einem oder mehreren Halogenatomen substituierter C₆-C₂₀-Arylrest, ein unsubstituierter C₃-C₂₀-Heteroarylrest, oder ein mit einem oder mehreren Halogenatomen substituierter C₃-C₂₀-Heteroarylrest sind;
und wobei die Mischverbindung auf Lithium-Nickel-Basis durch die folgende Formel 7 dargestellt wird:
<Formel 7> LiₓNi_{y}M_{1-y}O₂
wobei, in Formel 7,
x 0,9 bis 1,2 ist,
y 0,5 bis 1,0 ist, und
M Cobalt, Co; Aluminium, Al; oder eine Kombination davon ist.

2. Lithiumbatterie nach Anspruch 1, wobei, in Formel 1, R₁ bis R₄ jeweils unabhängig voneinander ein Wasserstoffatom, eine Methylgruppe oder eine Trifluormethylgruppe sind.

3. Lithiumbatterie nach Anspruch 1, wobei die durch Formel 1 dargestellte Verbindung eine der folgenden Verbindungen 2 bis 6 ist:

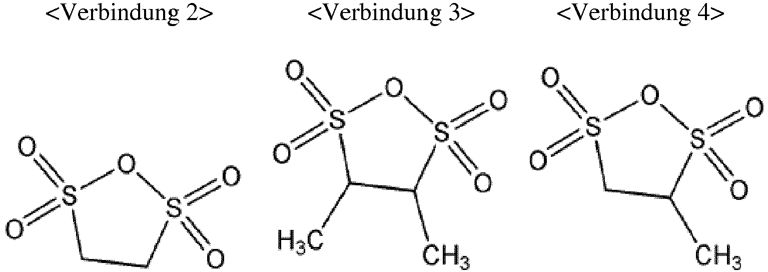

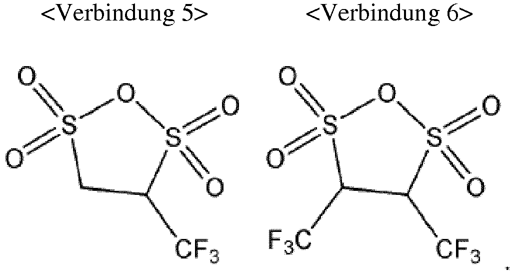

4. Lithiumbatterie nach Anspruch 1, wobei die durch Formel 7 dargestellte Verbindung eine Verbindung, dargestellt durch Formel 9, ist:
<Formel 9> LiₓNi_{y}Co_{z}Al_{1-y-z}O₂
wobei, in Formel 9, y 0,5 bis 1,0 ist und z 0 bis 0,5 ist.

5. Lithiumbatterie nach Anspruch 4, wobei die durch Formel 7 dargestellte Verbindung LiNi_{0,88}Co_{0,1}Al_{0,02}O₂ ist.

6. Lithiumbatterie nach Anspruch 1, wobei die durch Formel 1 dargestellte Verbindung in einer Menge von 0,1 Gew.-% bis 10 Gew.-%, bezogen auf ein Gesamtgewicht des Elektrolyten, vorliegt.

7. Lithiumbatterie nach Anspruch 1, wobei der Elektrolyt weiterhin ein organisches Lösungsmittel umfasst, wobei das organische Lösungsmittel Dialkylcarbonat, cyclisches Carbonat, linearen oder cyclischen Ester, lineares oder cyclisches Amid, aliphatisches Nitril, linearen oder cyclischen Ether, oder Derivate davon umfasst.

8. Lithiumbatterie nach Anspruch 1, wobei der Elektrolyt weiterhin ein organisches Lösungsmittel umfasst, wobei das organische Lösungsmittel Dimethylcarbonat (DMC), Ethylmethylcarbonat (EMC), Methylpropylcarbonat, Ethylpropylcarbonat, Diethylcarbonat (DEC), Dipropylcarbonat, Propylencarbonat (PC), Ethylencarbonat (EC), Butylencarbonat, Ethylpropionat, Ethylbutyrat, Acetonitril, Succinonitril (SN), Dimethylsulfoxid, Dimethylformamid, Dimethylacetamid, γ-Valerolacton, γ-Butyrolacton oder Tetrahydrofuran umfasst.

9. Lithiumbatterie nach Anspruch 1, wobei das Lithiumsalz LiPF₆, LiBF₄, LiSbF₆, LiAsF₆, LiClO₄, LiCF₃SO₃, Li(CF₃SO₂)₂N, LiC₄F₉SO₃, LiAlO₂, LiCl, LiI, LiAlCl₄ oder LiN(CₓF₂ₓ₊₁SO₂)(C_{y}F_{2y+1}SO₂), wobei x und y jeweils unabhängig voneinander 1 bis 20 sind, oder ein Gemisch davon umfasst.

10. Lithiumbatterie nach Anspruch 1, wobei eine Konzentration des Lithiumsalzes in dem Elektrolyten 0,01 M bis 2,0 M ist.

## Revendications

1. Batterie au lithium comprenant :
une électrode positive, l'électrode positive comprenant un composé composite à base de lithium-nickel qui contient de 50 à 100 % en moles de nickel par rapport à la quantité totale du métal de transition dans le composé composite ;
une électrode négative ; et
un électrolyte,
dans laquelle l'électrolyte comprend un sel de lithium et un composé représenté par la formule 1 suivante : 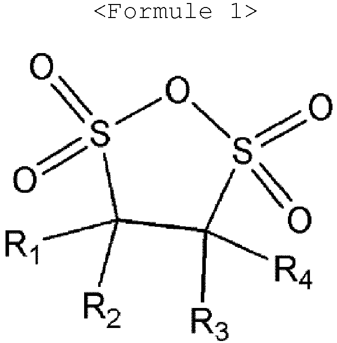
dans laquelle, dans la formule 1, R₁, R₂, R₃ et R₄ sont chacun indépendamment un atome d'hydrogène, un groupe alkyle en C₁ à C₁₀ non substitué, un groupe alkyle en C₁ à C₁₀ substitué avec un ou plusieurs atomes d'halogène, un groupe aryle en C₆ à C₂₀ non substitué, un groupe aryle en C₆ à C₂₀ substitué avec un ou plusieurs atomes d'halogène, un groupe hétéroaryle en C₃ à C₂₀ non substitué ou un groupe hétéroaryle en C₃ à C₂₀ substitué avec un ou plusieurs atomes d'halogène ;
et dans laquelle le composé composite à base de nickel-lithium est représenté par la formule suivante 7 :
<Formule 7> LiₓNi_{y}M_{1-y}O₂
dans laquelle, dans la formule 7,
x vaut 0,9 à 1,2,
y vaut 0,5 à 1,0, et
M est le cobalt, Co ; l'aluminium, Al ; ou une de leurs combinaisons.

2. Batterie au lithium selon la revendication 1, dans laquelle, dans la formule 1, R₁ à R₄ sont chacun indépendamment un atome d'hydrogène, un groupe méthyle ou un groupe trifluorométhyle.

3. Batterie au lithium selon la revendication 1, dans laquelle le composé représenté par la formule 1 est l'un des composés 2 à 6 suivants :

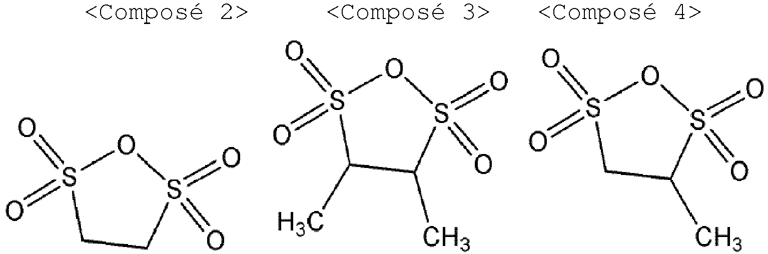

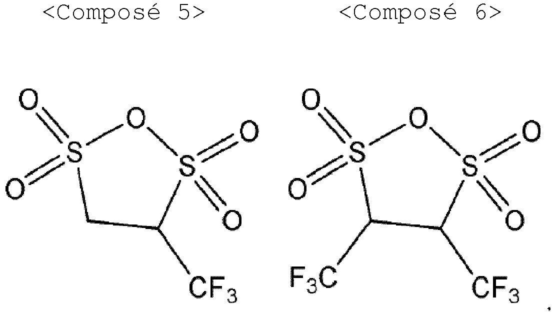

4. Batterie au lithium selon la revendication 1, dans laquelle le composé représenté par la formule 7 est un composé représenté par la formule 9 :
<Formule 9> LiₓNi_{y}CO_{z}Al_{1-y-z}O₂
dans laquelle, dans la formule 9, y vaut 0,5 à 1,0 et z vaut 0 à 0,5.

5. Batterie au lithium selon la revendication 4, dans laquelle le composé représenté par la formule 7 est LiNi_{0,88}CO_{0,1}Al_{0,02}O₂.

6. Batterie au lithium selon la revendication 1, dans laquelle le composé représenté par la formule 1 est présent en une quantité de 0,1 % en poids à 10 % en poids, sur la base d'un poids total de l'électrolyte.

7. Batterie au lithium selon la revendication 1, dans laquelle l'électrolyte comprend en outre un solvant organique, le solvant organique comprenant un dialkyl-carbonate, un carbonate cyclique, un ester linéaire ou cyclique, un amide linéaire ou cyclique, un nitrile aliphatique, un éther linéaire ou cyclique, ou leurs dérivés.

8. Batterie au lithium selon la revendication 1, dans laquelle l'électrolyte comprend en outre un solvant organique, le solvant organique comprenant le diméthyl-carbonate DMC, l'éthylméthylcarbonate EMC, le méthylpropyl-carbonate, l'éthylpropylcarbonate, le diéthylcarbonate DEC, le dipropylcarbonate, le carbonate de propylène PC, le carbonate d'éthylène EC, le carbonate de butylène, l'éthyl-propionate, l'éthylbutyrate, l'acétonitrile, le succinonitrile SN, le diméthylsulfoxyde, le diméthylformamide, le diméthylacétamide, la γ-valérolactone, la γ-butyrolactone ou le tétrahydrofuranne.

9. Batterie au lithium selon la revendication 1, dans laquelle le sel de lithium comprend LiPF₆, LiBF₄, LiSbF₆, LiAsF₆, LiClO₄, LiCF₃SO₃, Li(CF₃SO₂)₂N, LiC₄F₉SO₃, LiAlO₂, LiCl, LiI, LiAlCl₄ ou LiN(CₓF₂ₓ₊₁SO₂)(C_{y}F_{2y+1}SO₂) où x et y valent chacun indépendamment 1 à 20, ou un de leurs mélanges.

10. Batterie au lithium selon la revendication 1, dans laquelle une concentration du sel de lithium dans l'électrolyte est de 0,01 M à 2,0 M.
